# EUROPEAN PATENT APPLICATION

(11) **EP 0 945 810 A2**
(43) Date of publication of application: **29.09.1999**
(21) Application number: 99105696.1
(22) Date of filing: 19.03.1999
(51) Int. Cl.: G06F 15/80, G06F 11/00

(54) **Pipeline-type multi-processor system**

(30) Priority: 23.03.1998 JP 7377298
(71) Applicant: NEC CORPORATION, Tokyo (JP)
(72) Inventor: Koike, Tsuneo, Minato-ku, Tokyo (JP)
(74) Representative: Betten & Resch

(57) **Abstract**

The pipeline-type multi-processor system including a plurality of processor elements (21-23) for pipeline-processing data, a plurality of buffers (11-14) for holding input data and a processing result of each processor element, the buffers and the processor elements being cascade-connected in turn between data input and output, and a debug unit (51, 52) for selectively and externally outputting a processing result of each processor element for monitoring at the time of debugging.

## Description

### BACKGROUND OF THE INVENTION

### FIELD OF THE INVENTION

The present invention relates to a pipeline-type multi-processor system and, more particularly, to a pipeline-type multi-processor system enabling high-speed processing of a large volume of data.

### DESCRIPTION OF THE RELATED ART

Conventional pipeline-type multi-processor system of this kind includes a buffer means and a processor element provided at each stage and because of its pipeline processing in which predetermined data processing is simultaneously and sequentially conducted at each processor element, the system is used, for example, in high-speed processing of a large volume of sequential data such as image data.

This conventional pipeline-type multi-processor system will be described with reference to a drawing.

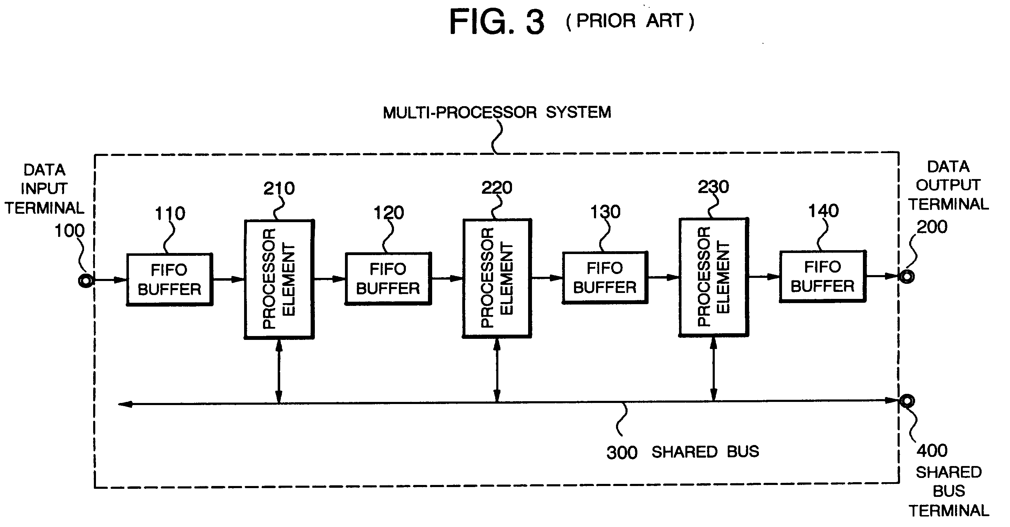

Fig. 3 is a block diagram showing an example of this conventional pipeline-type multi-processor system. With reference to Fig. 3, the conventional pipeline-type multi-processor system includes FIFO buffers 110 - 140 and processor elements 210 230 provided between a data input terminal 100 and a data output terminal 200 and has a shared bus 300 and a shared bus terminal 400.

The FIFO buffers 110 - 140 are each constituted by a memory or a register and hold data to be accessed by the processor elements 210 - 230, respectively. This conventional art employs a first-in first-out buffer means which first outputs first input data. The FIFO buffer 110, for example, first outputs data which is first applied from the data input terminal 100 to the processor element 210.

The processor elements 210 - 230 receive input of data from the FIFO buffers 110 - 130, respectively, and conduct their predetermined data processing to output data of the processing results to the FIFO buffers 120 - 140, respectively. The processor element 210, for example, receives input of data from the FIFO buffer 110 and conducts predetermined data processing to output data of the processing result to the FIFO buffer 120. In addition, each of the processor elements 210 - 230 is allowed to access external shared resources through the shared bus 300 and the shared bus terminal 400.

By pipeline processing, that is, receiving input of a large volume of sequential data such as image data through the data input terminal 100 and conducting predetermined data processing simultaneously and sequentially at each of the processor elements 210 - 230, this conventional pipeline-type multi-processor system processes a large volume of data at a high speed and outputs the processing results to the data output terminal 200. On this occasion, at the time of conducting predetermined data processing, each of the processor elements 210 - 230 accesses external shared resources through the shared bus 300 and the shared bus terminal 400 as required.

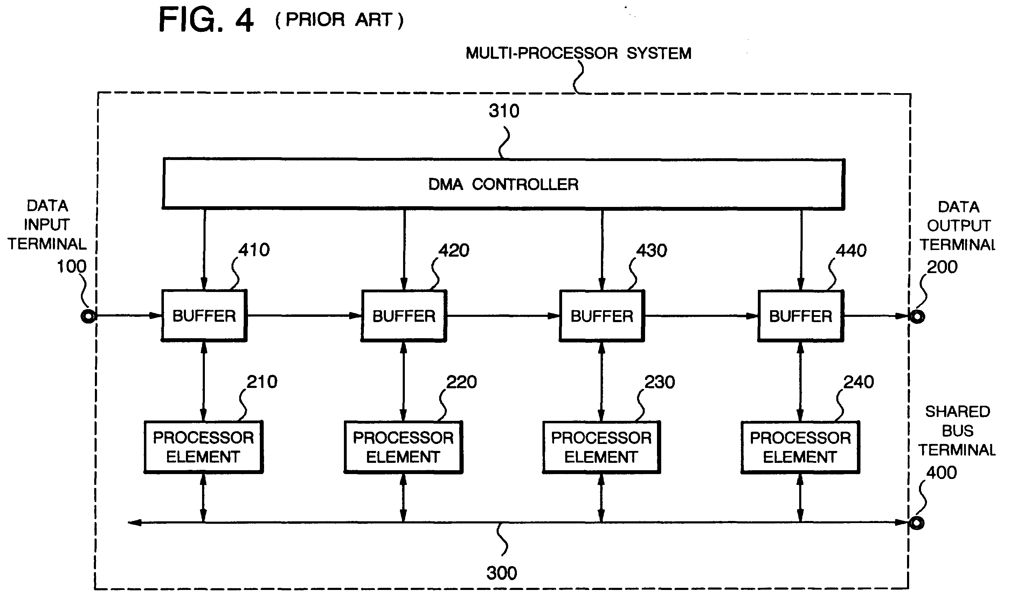

Fig. 4 is a block diagram showing another example of a conventional pipeline-type multi-processor system. With reference to Fig. 4, the conventional pipeline-type multi-processor system includes buffers 410 - 440, processor elements 210 - 240 and a DMA controller 310 and has a shared bus 300 and a shared bus terminal 400.

Each of the buffers 410 - 440 is constituted by a memory or a register. In this conventional art, the buffers 410 - 440 are cascade-connected between a data input terminal 100 and a data output terminal 200. In synchronization with a control signal from the DMA controller 310, data transfer between input and output of the respective buffers 410 - 440 is executed. Here, the buffers 410 - 440 are accessed by the processor elements 210 - 240, respectively, to conduct predetermined data processing except when data transfer is conducted.

In synchronization with the output of the DMA controller 310, the processor elements 210 - 240 access transfer data applied to the respective buffers 410 - 440 and conduct predetermined data processing to store the respective processing results at the buffers 410 - 440 as transfer data.

In response to the completion of the processing of the respective processor elements 210 - 240, the DMA controller 310 conducts synchronous control of the data transfer between input and output of the buffers 410 - 440.

By pipeline processing, that is, receiving input of a large volume of sequential data such as image data through the data input terminal 100, transferring data between the respective buffers 410 - 440 in synchronization with the output of the DMA controller 310 and conducting predetermined data processing simultaneously and sequentially at each of the processor elements 210 - 240, this conventional pipeline-type multi-processor system processes a large volume of data at a high speed and outputs the processing results to the data output terminal 200.

The above-described pipeline processing is the same as that of the conventional art of Fig. 3 except that data transfer between the respective buffers 410 - 440 is conducted in synchronization with the completion of the processing of the respective processor elements 210 - 240, and the processor elements 210 - 240 access external shared resources through the shared bus 300 and the shared bus terminal 400 as required for conducting predetermined data processing.

These conventional pipeline-type multi-processor systems, however, have shortcomings that because processing results which can be externally monitored are only the output data at a data output terminal, erroneous operation in a plurality of data processing which are internally pipeline-processed can not be directly specified and the number of test steps or the number of debugging steps is accordingly large.

### SUMMARY OF THE INVENTION

A first object of the present invention is to provide a pipeline-type multi-processor system enabling the number of test steps or the number of debugging steps to be drastically reduced.

A second object of the present invention is to provide a pipeline-type multi-processor system capable of externally monitoring processing results of each processor element in real time during real operation without affecting access to shared resources.

According to one aspect of the invention, a pipeline-type multi-processor system, comprises
a plurality of processor elements for pipeline-processing data,
a plurality of buffer means for holding input data and processing results of the respective processor elements, the buffer means and the processor elements being cascade-connected in turn between data input and output means, and
output means for selectively outputting a processing result of each the processor elements for monitoring at the time of debugging.

In the preferred construction, the output means selectively outputs one of the respective processing results to a shared bus which connects external shared resources and each the processor elements in response to a control signal at the time of debugging.

In another preferred construction, the output means are provided in the plural corresponding to the respective processor elements.

In another preferred construction, the output means are provided in the plural corresponding to the processor elements excluding the processor element at the final stage.

According to another aspect of the invention, a pipeline-type multi-processor system, comprises
a plurality of buffer means cascade-connected between data input and output means for holding and transferring data,
a plurality of processor elements for accessing the respective buffer means to conduct pipeline processing,
a DMA controller for conducting synchronous control of data transfer between the respective buffer means in response to the completion of the processing of each the processor elements, and
output means for selectively and externally outputting transfer data from each the buffer means for monitoring at the time of debugging.

In the preferred construction, the output means comprises control means responsive to a control signal for exercising control for selecting one of the respective transfer data and outputting the selected data to a debugging bus shared by the respective processor elements for monitoring at the time of debugging.

In another preferred construction, the output means comprises a gate circuit responsive to the output of the control means for gating each the transfer data and outputting the transfer data to the debugging bus for monitoring.

In another preferred construction, the output means comprises a plurality of gate circuits for gating, for each the buffer means, each the transfer data and outputting the transfer data to the debugging bus for monitoring, and control means for selecting the gate circuit which will output the transfer data for monitoring based on the control signal at the time of debugging.

In another preferred construction, the output means comprises a plurality of gate circuits for gating, for each the buffer means excluding the buffer means at the final stage, each the transfer data and outputting the transfer data to the debugging bus for monitoring, and control means for selecting the gate circuit which will output the transfer data for monitoring based on the control signal at the time of debugging.

Other objects, features and advantages of the present invention will become clear from the detailed description given herebelow.

### BRIEF DESCRIPTION OF THE DRAWINGS

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a block diagram showing a first embodiment of a pipeline-type multi-processor system of the present invention;
Fig. 2 is a block diagram showing a second embodiment of the pipeline-type multi-processor system of the present invention;
Fig. 3 is a block diagram showing an example of a conventional pipeline-type multi-processor system;
Fig. 4 is a block diagram showing another example of a conventional pipeline-type multi-processor system.

### DESCRIPTION OF THE PREFERRED EMBODIMENT

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

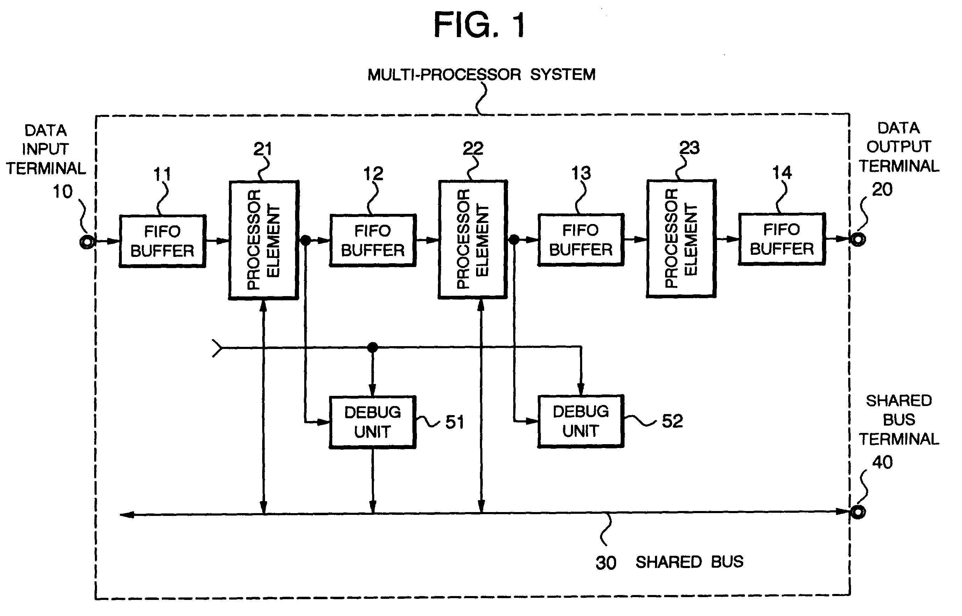

Fig. 1 is a block diagram showing structure of a pipeline-type multi-processor system according to a first embodiment of the present invention.

With reference to Fig. 1, the pipeline-type multi-processor system of the present embodiment includes FIFO buffers 11 - 14 and processor elements 21 - 23 provided between a data input terminal 10 and a data output terminal 20, has a shared bus 30 and a shared bus terminal 40 and further includes debug units 51 and 52. These components except the debug units 51 and 52 are the same as their counterparts illustrated in Fig. 3.

The FIFO buffers 11 - 14 hold data to be accessed by the processor elements 21 - 23, respectively. The FIFO buffer 11, for example, first outputs data first input from the data input terminal 10 to the processor element 21.

The processor elements 21 - 23 receive input of data from the FIFO buffers 11 - 13 to conduct predetermined data processing and output data of processing results to the FIFO buffers 12 - 14, respectively. The processor element 21, for example, receives input of data from the FIFO buffer 11 to conduct predetermined data processing and outputs data of the processing result to the FIFO buffer 12. Each of the processor elements 21 - 23 accesses external shared resources not shown through the shared bus 30 and the shared bus terminal 40.

Input data to the FIFO buffers 12 and 13 are applied to the debug units 51 and 52, respectively. In addition, the outputs of the debug units 51 and 52 are connected to the shared bus 30 such that contents of the debug units 51 and 52 are output through the shared bus 30.

According to the control of a control signal CS, each of the debug units 51 and 52, at debugging, selects one of the processing results of the respective processor elements 21 - 23 and outputs, for monitoring, the selected result to the shared bus 30 which connects the external shared resources and the respective processor elements 21 - 23. Inputs to the FIFO buffers 12 and 13, that is, processing results obtained at the processor element 21 and the processor element 22 can be monitored at the shared bus terminal 40.

As to the first and the last stages, since they can be monitored at the data input terminal 10 and the data output terminal 20, no debug unit is provided.

Next, operation of the above-described system will be described. By receiving input of a large volume of sequential data such as image data through the data input terminal 10 and simultaneously and sequentially conducting predetermined data processing at each of the processor elements 21 - 23, that is, by conducting pipeline processing, the pipeline-type multi-processor system of the present embodiment processes a large volume of data at a high speed to output final processing data to the data output terminal 20.

At the same time, at the time of debugging, one of the processing results of the processor elements 21 and 22 is selected by the debug units 51 and 52 and is output to the shared bus 30 and then output to the shared bus terminal 40 for monitoring in response to the control signal CS.

As a result, for example, the input data applied to the data input terminal 10 and the processing result obtained by the processor element 21 which is selectively output to the shared bus terminal 40 by the debug unit 51 make it possible to check whether the processor element 21 normally operates or not. Also, the processing result obtained by the processor element 21 which is selectively output to the shared bus terminal 40 by the debug unit 51 and the processing result obtained by the processor element 22 which is selectively output to the shared bus terminal 40 by the debug unit 52 make it possible to check whether the processor element 22 normally operates or not. Furthermore, the processing result obtained by the processor element 22 which is selectively output to the shared bus terminal 40 by the debug unit 52 and the processing result obtained at the data output terminal 20 by the processor element 23 make it possible to check whether the processor element 23 normally operates or not.

As described in the foregoing, input data to be processed and processed data make it possible to check whether each processor element normally operates or not.

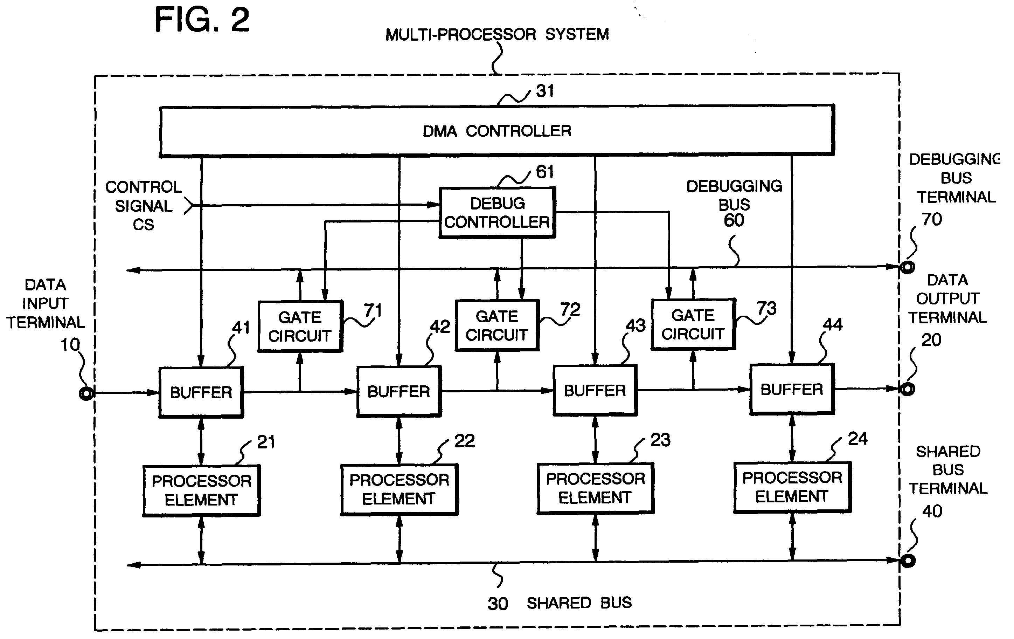

Fig. 2 is a block diagram showing structure of a pipeline-type multi-processor system according to a second embodiment of the present invention.

With reference to Fig. 2, the pipeline-type multi-processor system of the present embodiment includes buffers 41 - 44, processor elements 21 - 24 and a DMA controller 31 and has a shared bus 30 and a shared bus terminal 40, and further includes a debug controller 61 and gate circuits 71 - 73 and has a debugging bus 60 and a debugging bus terminal 70 which are shared by the respective processor elements 21 - 24.

The components except the debug controller 61 and the gate circuits 71 - 73 are the same as their counterparts illustrated in Fig. 4. More specifically, the buffers 41 - 44 are each constituted by a memory or a register and cascade-connected between a data input terminal 10 and a data output terminal 20. In synchronization with a control signal from the DMA controller 31, data transfer between input and output of the respective buffers 41 - 44 is executed. Here, the buffers 41 - 44 are accessed by the processor elements 21 - 24, respectively, to conduct predetermined data processing except when data transfer is conducted. In addition, in synchronization with the output of the DMA controller 31, the processor elements 21 - 24 respectively access transfer data applied to the buffers 41 - 44 to conduct predetermined data processing and store their processing results at the buffers 41 - 44 as transfer data. The DMA controller 31 conducts synchronous control of data transfer between input and output of the respective buffers 41 - 44 in response to the completion of the processing of the processor elements 21 - 24.

Data to be processed is applied through the data input terminal 10 and stored in the buffer 41 at the first stage by the control of the DMA controller 31. This data is processed by the processor element 21 and upon completion of the processing, the processing result is stored in the buffer 42 at the subsequent stage by the control of the DMA controller 31. Then, upon completion of the processing of the final stage, the processing result is output through the data output terminal 20 by the control of the DMA controller 31.

The debug controller 61, at debugging, exercises control in response to the control signal CS such that one of the transfer data of the respective buffers 41 - 44 is selected and output for monitoring to the debugging bus 60 shared by the respective processor elements 21 - 24.

The gate circuits 71 - 73 are provided between the buffers 41 - 44 at the respective stages for gating transfer data of the respective buffers 41 - 44 and outputting the same to the debugging bus 60 for monitoring under control of the debug controller 61.

As to the first stage and the last stage, since they can be monitored at the data input terminal 10 and the data output terminal 20, no gate circuit is provided.

Next, operation of the system of the present embodiment will be described. By receiving input of a large volume of sequential data such as image data through the data input terminal 10, conducting data transfer between the respective buffers 41 - 44 in synchronization with the output of the DMA controller 31 and simultaneously and sequentially conducting predetermined data processing at each of the processor elements 21 - 23, that is, by conducting pipeline processing, the pipeline-type multi-processor system of the present embodiment processes a large volume of data at a high speed and outputs processing data to the data output terminal 20.

At the same time, at the time of debugging, the debug controller 61 exercises control in response to the control signal CS for selecting one of the gate circuits 71 - 73, so that the selected gate circuit gates transfer data of its corresponding buffer and outputs the same to the debugging bus 60 and then to the debugging bus terminal 70 for monitoring.

As a result, for example, the input data applied to the data input terminal 10 and the processing result obtained by the processor element 21 which is output to the debugging bus terminal 70 by the gate circuit 71 make it possible to check whether the processor element 21 normally operates or not. Also, the processing result obtained by the processor element 21 which is output to the debugging bus terminal 70 by the gate circuit 71 and the processing result obtained by the processor element 22 which is output to the debugging bus terminal 70 by the gate circuit 72 make it possible to check whether the processor element 22 normally operates or not. The processing result obtained by the processor element 22 which is output to the debugging bus terminal 70 by the gate circuit 72 and the processing result obtained by the processor element 23 which is output to the debugging bus terminal 70 by the gate circuit 73 make it possible to check whether the processor element 23 normally operates or not. Also, the processing result obtained by the processor element 23 which is output to the debugging bus terminal 70 by the gate circuit 73 and the processing result obtained at the data output terminal 20 by the processor element 24 make it possible to check whether the processor element 24 normally operates or not.

Since the pipeline-type multi-processor system of the present embodiment uses, at the time of debugging, not the shared bus 30 and the shared bus terminal 40 but the debugging bus 60 and the debugging bus terminal 70 dedicated to debugging, the system is allowed to externally monitor processing results of the respective processor elements 21 - 24 in real time during real operation without affecting access to shared resources. Debugging during real-time processing is accordingly possible.

Although the above-described second embodiment is structured such that data of the buffers at the respective stages is output to the debugging bus terminal 70 while sharing the debugging bus 60, it can be structured to have a debug output terminal at each of the gate circuits 71 - 73 without the provision of the debugging bus 60 and the debugging bus terminal 70.

As described in the foregoing, the pipeline-type multi-processor system according to the present invention has the effects of, at the time of debugging, selecting one of processing results of the respective processor elements and outputting the same for monitoring to directly specify erroneous operation in a plurality of data processing which are simultaneously and sequentially pipeline-processed in the system, thereby drastically reducing the number of test steps or the number of debugging steps.

Although the invention has been illustrated and described with respect to exemplary embodiment thereof, it should be understood by those skilled in the art that the foregoing and various other changes, omissions and additions may be made therein and thereto, without departing from the spirit and scope of the present invention. Therefore, the present invention should not be understood as limited to the specific embodiment set out above but to include all possible embodiments which can be embodies within a scope encompassed and equivalents thereof with respect to the feature set out in the appended claims.

## Claims

1. A pipeline-type multi-processor system, comprising:
a plurality of processor elements (21-23) for pipeline-processing data;
a plurality of buffer means (11-14) for holding input data and processing results of the respective processor elements, said buffer means and said processor elements being cascade-connected in turn between data input and output means (10, 20); and
output means (51, 52) for selectively outputting a processing result of each said processor elements for monitoring at the time of debugging.

2. The pipeline-type multi-processor system as set forth in claim 1, wherein
said output means (51, 52)
selectively outputs one of said respective processing results to a shared bus which connects external shared resources and each said processor elements in response to a control signal at the time of debugging.

3. The pipeline-type multi-processor system as set forth in claim 1, wherein
said output means (51, 52) are provided in the plural corresponding to said respective processor elements.

4. The pipeline-type multi-processor system as set forth in claim 1, wherein
said output means (51, 52) are provided in the plural corresponding to said processor elements excluding said processor element at the final stage.

5. A pipeline-type multi-processor system, comprising:
a plurality of buffer means (41-44) cascade-connected between data input and output means (10, 20) for holding and transferring data;
a plurality of processor elements (21-24) for accessing said respective buffer means to conduct pipeline processing;
a DMA controller (31) for conducting synchronous control of data transfer between said respective buffer means in response to the completion of the processing of each said processor elements; and
output means for selectively outputting transfer data from each said buffer means for monitoring at the time of debugging.

6. The pipeline-type multi-processor system as set forth in claim 5, wherein
said output means comprising
control means (61) responsive to a control signal for exercising control for selecting one of said respective transfer data and outputting the selected data to a debugging bus shared by said respective processor elements for monitoring at the time of debugging.

7. The pipeline-type multi-processor system as set forth in claim 5, wherein
said output means comprising
a gate circuit responsive to the output of said control means for gating each said transfer data and outputting said transfer data to said debugging bus for monitoring.

8. The pipeline-type multi-processor system as set forth in claim 5, wherein
said output means comprising
a plurality of gate circuits (71-73) for gating, for each said buffer means, each said transfer data and outputting said transfer data to said debugging bus for monitoring, and
control means (61) for selecting said gate circuit which will output said transfer data for monitoring based on the control signal at the time of debugging.

9. The pipeline-type multi-processor system as set forth in claim 5, wherein
said output means comprising
a plurality of gate circuits (71-73) for gating, for each said buffer means excluding said buffer means at the final stage, each said transfer data and outputting said transfer data to said debugging bus for monitoring, and
control means (61) for selecting said gate circuit which will output said transfer data for monitoring based on the control signal at the time of debugging.
